# EUROPEAN PATENT SPECIFICATION

(11) **EP 3 515 257 B1**
(45) Date of publication and mention of the grant of the patent: **03.04.2024**
(21) Application number: 17853795.7
(22) Date of filing: 20.09.2017
(51) Int. Cl.: A47C 31/10, C08K 7/02, D04B 1/16, A47C 31/00

(54) **MATTRESS PROTECTORS, MATTRESSES COVERED BY MATTRESS PROTECTORS, AND RELATED METHODS**
MATRATZENSCHÜTZER, MIT MATRATZENSCHÜTZERN BEZOGENE MATRATZEN UND ZUGEHÖRIGE VERFAHREN
DISPOSITIFS DE PROTECTION DE MATELAS, MATELAS RECOUVERTS PAR DES DISPOSITIFS DE PROTECTION DE MATELAS ET PROCÉDÉS ASSOCIÉS

(30) Priority: 21.09.2016 US 201615272162
(43) Date of publication of application: 31.07.2019
(73) Proprietor: Purple Innovation, LLC, Alpine, Utah 84004 (US)
(72) Inventor: PEARCE, Tony M., Alpine, Utah 84004 (US)
(74) Representative: Banse & Steglich Patentanwälte PartmbB
(86) International application number: PCT/US2017/052462
(87) International publication number: WO 2018/057595

(56) References cited:
- EP-A2- 2 708 160
- WO-A1-98/38896
- US-A- 5 603 132
- US-A1- 2008 202 665
- US-A1- 2011 010 865
- US-A1- 2012 255 120
- US-A1- 2012 255 120
- US-A1- 2014 248 481

## Description

### PRIORITY CLAIM

This application claims the benefit of the filing date of United States Patent Application Serial No. 15/272,162, filed September 21, 2016, for "Mattress Protectors, Mattresses Covered by Mattress Protectors, and Related Methods."

### TECHNICAL FIELD

Embodiments of the disclosure relate generally to mattress protectors for protecting a mattress from fluids, dust, bugs, mold, and other matter, mattresses covered by such mattress protectors, and related methods.

### BACKGROUND

Mattress protectors are commonly used to cover or encase a mattress or other cushion so as to protect the mattress or cushion from liquid spills, dust, dirt, bugs, and other matter. For example, EP 2 708 160 A2 relates to a waterproof mattress cover with improved resistance to puncture or piercing by sharp objects, wherein the covers or protectors are designed to protect mattresses or similar soft furnishings from liquid contamination. Mattress protectors protect the person resting on the mattress from materials that might be present in the mattress.

Mattress protectors commonly include a fabric coated with, or laminated to a layer of thermoplastic polyurethane material. The layer of thermoplastic polyurethane prevents liquid from penetrating into the mattress, preferably while allowing gas and vapor transmission through the mattress protector. The mattress protector also prevents transmission of allergens, mites, bed bugs, and other insects. The layer of thermoplastic polyurethane protects the mattress from staining, soiling, and soaking, while also protecting a person resting on the mattress from allergens, mites and bed bugs that may reside within the mattress. The layer of thermoplastic polyurethane may also assist in preventing allergens, mites, and bed bugs from entering the mattress in the first place.

Commercially available mattress protectors, however, tend to be relatively inelastic and non-stretchable, as the thermoplastic polyurethane layer is relatively stiff and resistant to stretching. In addition, the fibers commonly employed in the fabric layer are also not substantially elastic.

The present inventor has discovered that, while the prior non-stretch or low-stretch mattress protectors are adequate for traditional firm spring mattresses, easy and substantive stretchability is important for modem mattresses (such as mattresses based on memory foam, latex, air bladders, or buckling hollow-column gel material), which tend to be more deformable so as to allow the mattress to better conform to the shape of the body of a person resting upon the mattress. When a non-stretch or low-stretch mattress protector is used with such a mattress, the mattress protector may hinder or prevent the mattress from fully deforming and conforming to the shape of the body of a person resting upon the mattress, thus creating higher pressure and discomfort on the body of the person.

### DISCLOSURE

The invention is directed to a mattress protector comprising a composite sheet having a non-deformed length and a non-deformed width. The composite sheet includes a fabric and a water impermeable polymer carried by the fabric. The composite sheet is capable of repeatedly stretching to a deformed length of at least 115% of the non-deformed length and returning to within 8% of the non-deformed length without rupture or permanent wrinkling of the composite sheet.

A preferred embodiment relates to an assembly comprising a mattress and a mattress protector covering at least one surface of the mattress. The mattress protector comprises a composite sheet having a non-deformed length and a non-deformed width. The composite sheet includes a fabric and a water impermeable polymer carried by the fabric. The composite sheet is capable of repeatedly stretching to a deformed length of at least 115% of the non-deformed length and returning to within 8% of the non-deformed length without rupture or permanent wrinkling of the composite sheet.

A further embodiment relates to a method of forming a mattress protector. In accordance with such method, a fabric is provided, and a water impermeable polymer is provided on the fabric so as to form a composite sheet having a non-deformed length and a non-deformed width. The composite sheet is formulated and configured so as to be capable of repeatedly stretching to a deformed length of at least 115% of the non-deformed length and returning to within 8% of the non-deformed length without rupture or permanent wrinkling of the composite sheet.

### BRIEF DESCRIPTION OF THE DRAWINGS

While the specification concludes with claims particularly pointing out and distinctly claiming what are regarded as embodiments of the present disclosure, various features and advantages of embodiments of the disclosure may be more readily ascertained from the following description of example embodiments of the disclosure when read in conjunction with the accompanying drawings, in which:
FIG. 1 is a perspective view of an embodiment of a mattress protector of the present disclosure disposed on a mattress;
FIG. 2 is a simplified and schematically illustrated cross-sectional side view of an embodiment of a composite sheet of the mattress protector of FIG. 1;
FIG. 3 is a simplified and schematically illustrated drawing of a knit fabric of the composite sheet of FIG. 2;
FIG. 4 is a simplified and schematically illustrated cross-sectional side view of a composite sheet of a mattress protector that is not part of the invention;
FIG. 5 is a perspective view of another embodiment of a mattress protector of the present disclosure disposed on a mattress, in which the mattress protector includes a top portion and four side portions;
FIG. 6 is a side view of the mattress protector of FIG. 5 disposed on a mattress.
FIG. 7 is a side view like that of FIG. 6 and illustrates another embodiment of a mattress protector of the present disclosure enclosing a mattress, in which the mattress protector includes a top portion, a bottom portion, and four side portions; and
FIG. 8 is a simplified and schematically illustrated drawing of a portion of a mattress cushion that may be employed in a mattress together with mattress protectors as disclosed herein.

### MODE(S) FOR CARRYING OUT THE INVENTION

The illustrations presented herein are not actual views of any particular mattress cover, mattress, material, or product, but are merely idealized representations employed to describe embodiments of the present invention. Elements common between figures may retain the same numerical designation.

Embodiments of the present invention include mattress protectors that are, relative to known mattress protectors, more distortable and highly conformable.

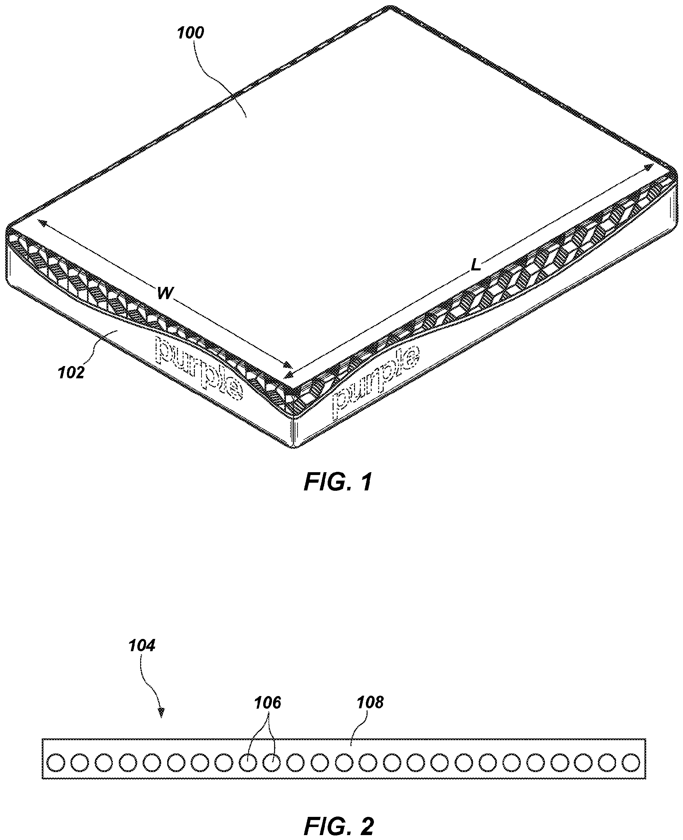

FIG. 1 illustrates an embodiment of a mattress protector 100 of the present invention disposed on a mattress 102. The mattress protector 100 of FIG. 1 is sized and configured to rest upon and cover only an upper surface of a mattress 102. The mattress protector 100 is, thus, planar when properly positioned on the mattress 102. The mattress protector 100 is rectangular, and has a non-deformed length L and width W.

The non-deformed length L and the width W may be substantially equal to, respectively, standard length and width dimensions for standard sized commercial mattresses. For example, a Twin size mattress protector 100 may have a length of between about 72 and 76 inches (about 182.88 cm and about 193.04 cm), and a width of between about 37 and 41 inches (about 93.98 cm and about 104.14 cm). A Twin XL size mattress protector 100 may have a length of between about 78 and about 82 inches (about 198.12 cm and about 208.28 cm), and a width of between about 37 and about 41 inches (about 93.98 cm and about 104.14 cm). A Full size mattress protector 100 may have a length of between about 72 and about 76 inches (about 182.88 cm and about 193.04 cm), and a width of between about 52 and about 56 inches (about 132.08 cm and about 142.24 cm). A Full XL size mattress protector 100 may have a length of between about 78 and about 82 inches (about 198.12 cm and about 208.28 cm), and a width of between about 52 and about 56 inches (about 132.08 cm and about 142.24 cm). A Queen size mattress protector 100 may have a length of between about 78 and about 82 inches (about 198.12 cm and about 208.28 cm), and a width of between about 58 inches (about 147.32 cm) and about 62 inches (about 157.48 cm). A King size mattress protector 100 may have a length of between about 78 and about 82 inches (about 198.12 cm and about 208.28 cm), and a width of between about 74 inches (about 187.96 cm) and about 78 inches (about 198.12 cm). A California King size mattress protector 100 may have a length of between about 82 (about 208.28 cm) and about 86 inches (about 218.44 cm), and a width of between about 70 inches (about 177.8 cm) and about 74 inches (about 187.96 cm).

The mattress protector 100 consists essentially of a sheet of composite material 104, which is illustrated schematically in FIG. 2. As shown in FIG. 2, the sheet of composite material 104 includes a fabric 106 and a layer of polymer material 108 carried by the fabric 106. As discussed in further detail below, the fabric 106 has a high content of elastomeric fibers such that it can be highly distorted and then return to its original shape when the distorting force is removed. The layer of polymer material 108 is relatively thin, and is also stretchable. The layer of polymer material 108 is impermeable to water and other liquids so as to prevent transmission thereof through the mattress protector 100.

The sheet of composite material 104 is capable of repeatedly stretching (for example, two hundred times or more) to a deformed length of at least 115% of the non-deformed length and returning to within 8% of the non-deformed length (after each cycle) without rupture or permanent wrinkling of the composite sheet. According to the invention, the composite sheet is capable of such repeated stretching and relaxation without rupture or permanent wrinkling responsive to a tensile force less than six pounds (2.72 kg) per linear inch (linear 2.54 cm). In yet further embodiments, the composite sheet is capable of repeatedly stretching to a deformed length of at least 125% of the non-deformed length and returning to within 8% of the non-deformed length, without rupture or permanent wrinkling of the composite sheet, responsive to a tensile force less than five pounds (2.26 kg) per linear inch (linear 2.54 cm).

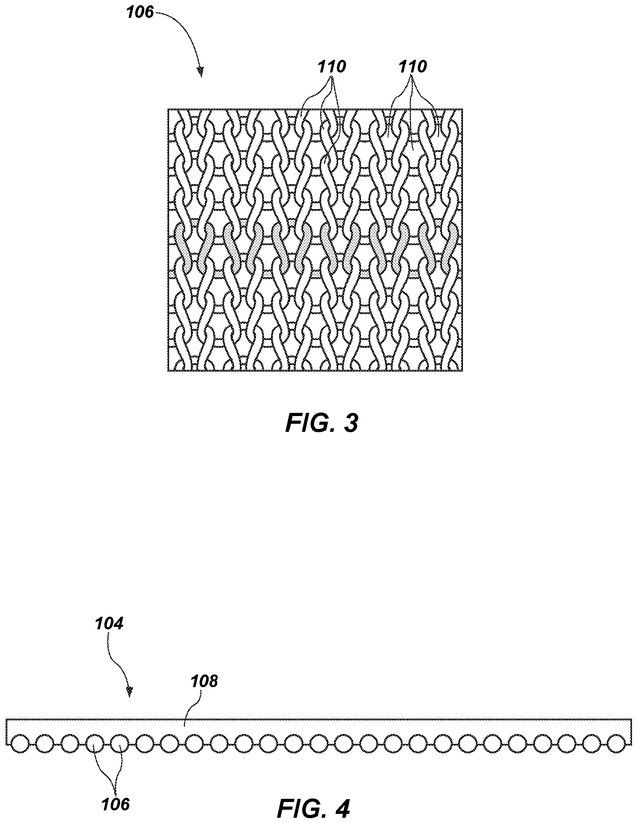

Referring to FIG. 3, the fabric 106 is circular-knitted. The knitting of the fabric 106 allows the fabric 106 to be relatively more stretchable relative to woven fabrics. The knitted fabric 106 may comprise fiber yarn or thread 110 that has been knit to form the knitted fabric 106.

As previously mentioned, the fabric 106 may have a high content of elastomeric fibers relative to commercially available mattress protectors. For example, the fabric 106 may comprise at least 4% by weight, at least 10% by weight, or even at least 15% elastomeric fibers by weight of the fabric 106. As a non-limiting example, the elastomeric fibers may comprise spandex (polyester-polyurethane copolymer, also referred to in the industry as "LYCRA^{®}" or "elastane").

The fabric 106 may include additional non-elastomeric fibers, such as polyester, cotton, rayon (which may be derived from bamboo, for example), or any other suitable synthetic or natural fibers.

For example, the fabric 106 may include between about 10% and about 20% by weight spandex and between about 80% and about 90% by weight polyester. As one particular non-limiting example, the fabric 106 may include about 15% by weight spandex, and about 85% by weight polyester. Such a fabric may be relatively inexpensive and strong, and sufficiently stretchable, even when combined with a layer of polymer material 108 as described hereinbelow.

The layer of polymer material 108 has a composition and thickness selected such that it will exhibit the desired barrier properties, be sufficiently stretchable as described hereinabove, and be relatively quiet when distorted. As a person resting upon the mattress 102 over the mattress protector 100 adjusts position, the mattress protector 100 generates little noise. Thus, the mattress protector 100 is quieter than commercially available mattress protectors, which typically include a layer of thermoplastic polyurethane having a thickness of 0.002 inch (0.00508 cm) or more. The noise generated upon deformation is primarily a function of the modulus of elasticity of the thermoplastic polyurethane and the thickness of the layer of thermoplastic polyurethane.

In some embodiments, the layer of polymer material 108 may comprise a layer of thermoplastic polyurethane. Any other elastic or visco-elastic polymer materials that prevent water and other liquid transmission may be used in accordance with embodiments of the present disclosure. The layer of polymer material 108, while being impermeable to water and other liquids, may be somewhat breathable to gas and/or vapor, which may provide increased comfort to the user.

The layer of polymer material 108 may have an average layer thickness of about 0.0015 inch (0.00381 cm) or less, or even about 0.001 inch (0.00254 cm) or less. In addition to being relatively thin, a relatively stretchable (lower tensile modulus) polymer material 108 may be employed. By way of example and not limitation, the layer of polymer material 108 may exhibit an average fabric stretch percent in the long direction (along the length L of the mattress protector 100 (FIG. 1)) of about 50% or more, about 55% or more, or even about 60% or more, and an average fabric stretch percent in the short direction (along the width W of the mattress protector 100) of about 25% or more, about 30% or more, or even about 35% or more, when tested according to ASTM D2594-04 R2012 with a ten-pound (4.53-kilogram) applied weight. Additionally, the layer of polymer material 108 may exhibit an average fabric growth percent in the long direction (along the length L of the mattress protector 100) of about 10% or less, about 7.5% or less, or even about 6% or less, and an average fabric growth percent in the short direction (along the width W of the mattress protector 100) of about 15% or less, about 12.5% or less, or even about 11% or less, when tested according to ASTM D2594-04 R2012 with a sixty second recovery period. When tested after a one hour recovery period according to ASTM D2594-04 R2012, the layer of polymer material 108 may exhibit an average fabric growth percent in the long direction of about 5% or less, about 3.5% or less, or even about 2.5% or less, and an average fabric growth percent in the short direction of about 10% or less, about 8% or less, or even about 7% or less.

Returning to FIG. 2, in the embodiment shown therein, the fabric 106 is substantially embedded within the layer of polymer material 108. Referring to FIG. 4, in an example not forming part of the invention, the layer of polymer material 108 may be disposed primarily on one side of the fabric 106, such that the fabric is at least partially exposed on one side thereof. The layer of polymer material 108 may be formed on the fabric 106 using a deposition process, such as a thermal spray deposition process. In other exmaples not forming part of the invention, the layer of polymer material 108 may be formed separate from the fabric 106, and then laminated to the fabric 106 by applying heat and pressure to bond the layer of polymer material 108 to the fabric 106. Other processes not forming part of the invention may be used such as calendering or screeding.

The sheet of composite material 104 is highly conformable in that, due to the stretchiness of the composite material 104, and due to the thinness and/or low tensile modulus of elasticity of the layer of polymer material 108, a body resting upon the mattress 102 with the mattress protector 100 therein can sink into the mattress globally or locally without substantial bridging or fabric tensile stress arising in the sheet of composite material 104, which would hinder or prevent the resting body from sinking into the mattress 102, and, hence, prevent the mattress 102 from fully conforming to the natural shape of the resting body, and/or give rise to increased pressure on the resting body.

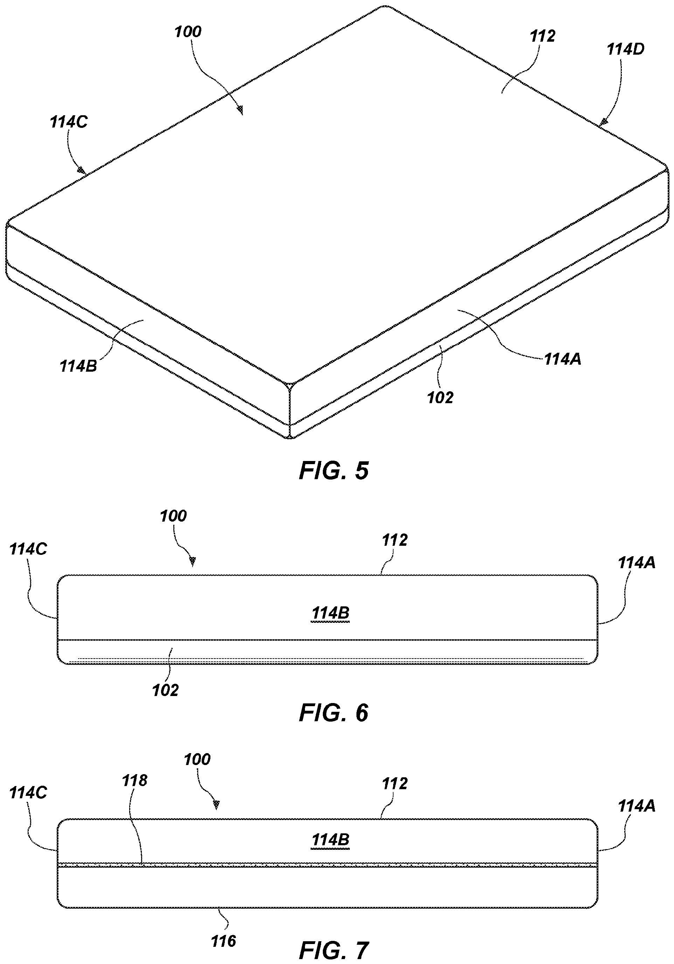

In other embodiments, the mattress protector 100 may take the form of a fitted sheet, as illustrated in FIGS. 5 and 6. In such embodiments, the mattress protector 100 includes a rectangular top portion 112 and four rectangular side portions 114A-114D. Opposing side ends of each rectangular side portion 114A-114D may be sewn or otherwise adjoined to side ends of two adjacent rectangular side portions 114A-114D. At least the top portion 112 comprises the sheet of composite material 104 as described herein; although the side portions 114A-114D may also comprise such a composite material 104 so as to protect the sides of the mattress 102. The mattress protector 100 of FIGS. 5 and 6 may further include an elastic member extending along a lower end of each of the four rectangular side portions 114A-114D to firmly secure the mattress protector 100 in place on the mattress 102. The elastic member may be secured within a hem at the lower end of each of the four rectangular side portions 114A-114D, and may extend entirely around the lower edge of the mattress protector 100. In other embodiments, elastic members may be sewn around only the corners of the mattress protector 100 at the bottom edges of the four rectangular side portions 114A-114D, such that the elastic members extend around only the corner portions of the mattress protector 100.

In the embodiment of FIGS. 5 and 6, the mattress protector 100 comprises a single continuous sheet of the composite material 104, which is sewn only at the corners and hemmed at the free peripheral edges of the sheet of composite material 104.

Referring to FIG. 7, in yet further embodiments, the mattress protector 100 may be configured to substantially entirely encase a mattress 102. In such embodiments, the mattress protector 100 may have the shape of a rectangular prism when disposed on a mattress 102, and may include a rectangular top portion 112, a rectangular bottom portion 116, and four rectangular side portions 114A-114D (only 114A-114C are visible in FIG. 7). At least the top portion 112 comprises the sheet of composite material 104 as described herein; although the side portions 114A-114D and/or the bottom portion 116 also may comprise such a composite material 104 so as to protect the sides and/or bottom of the mattress 102. The mattress protector 100 in such embodiments may further include an openable and closable aperture through which a mattress 102 may be inserted into the mattress protector 100. A fastening member 118, such as a zipper or hook-and-loop material, may be used for fastening the aperture closed. For example, a zipper may extend in a horizontal direction across one or more of the side portions 114A-114D at least partially around the mattress protector 100. When the zipper is unzipped, a mattress 102 may be inserted into the interior of the mattress protector 100, after which the zipper may be closed to encase the mattress 102 within the mattress protector 100.

A sheet of composite material 104 as described herein and including a knit fabric 106 comprising 15% by weight spandex and 85% by weight polyester, and a polymer material 108 comprising low-modulus thermoplastic polyurethane and having a layer thickness of 0.001 inch (0.00254 cm) may be machine washable and machine dryable. Furthermore, such a composite material 104 is stain resistant and capable of grading at level five (5) when tested according to the American Association of Textile Chemists and Colorists (AATCC) test 130-2015 for stain release using blood. Sewn seams of such a composite material 104 may exhibit relatively high strength. For example, corner seams between adjacent side portions 114A-114D may exhibit a minimum bursting strength of at least 106 psi (730.8443 kPa) when tested according to ASTM Test Method D3786/D3786M-13, while the seams between the top portion 112 and the side portions 114A-114D may exhibit a minimum bursting strength of at least 49 psi (337.8431 kPa) when tested according to ASTM Test Method D1683/D1683M-11. Such a composite material 104 is non-pilling and grades at a class five (5) when tested according to ASTM Test Method D3512/3512M-10 (2014). Furthermore, such a composite material 104 exhibits good durability and may require a minimum of 1,863 cycles or more to reach the backer, and a minimum of 4,148 cycles or more to reach a hole when tested according to ASTM Test Method D3389-15.

Furthermore, the stretchability of the composite material 104 allows embodiments of the mattress protector 100 as illustrated in FIGS. 5 through 7 to fit mattresses 102 having relatively thick dimensions (e.g., up to 18 inches (45.72 cm) thick or more), even when the side portions 114A-114D include the composite material 104. Mattress protectors as described herein also may be sized and configured to cover mattress toppers (also referred to as mattress "overlays"), in addition to mattresses themselves.

Although embodiments of mattress protectors 100 as described herein may be employed with any style of mattress, they are particularly advantageous when used with modem mattresses employing advanced mattress technology, such as those including elastomeric buckling column walls, memory foam, latex, and air-bladders, which tend to be highly distortable and more conforming to the body of a user.

For example, in some embodiments, a mattress protector 100 as described herein may be employed in conjunction with mattresses that include an elastomeric polymer cushion including buckling walls defining columnar voids extending within the mattress. Examples of such mattresses are disclosed in, for example, U.S. Patent No. 5,749,111 issued May 12, 1998 to Pearce, U.S. Patent No. 6,026,527 issued February 22, 2000 to Pearce, U.S. Patent No. 6,413,458 issued July 2, 2002 to Pearce, U.S. Patent No. 8,919,750 issued December 30, 2014 to Pearce et al..

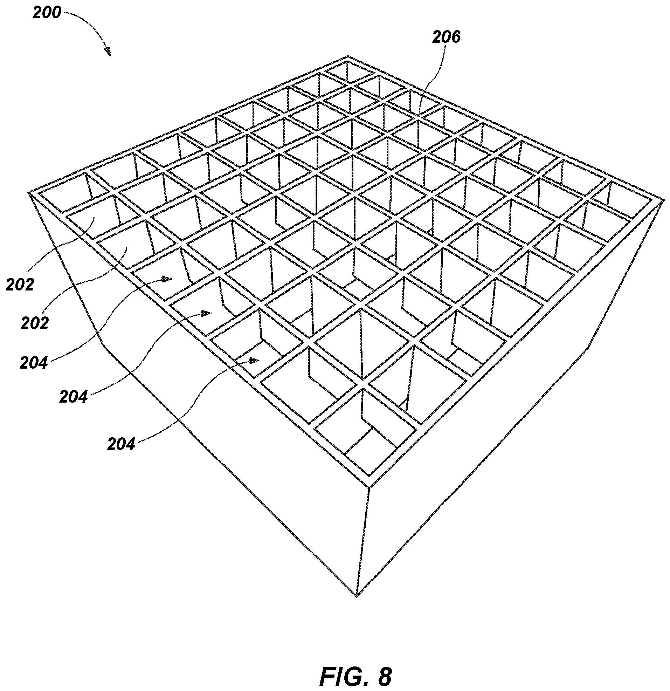

FIG. 8 illustrates a portion of an example of such an elastomeric polymer cushion 200. The elastomeric polymer cushion 200 has buckling walls 202 defining columnar voids 204 extending within the cushion 200 generally along a direction perpendicular to a cushioning surface 206 of the elastomeric polymer cushion 200. The buckling walls 202 are configured to buckle when a force applied to the cushioning surface 206 exceeds a threshold level.

As used herein, the term "elastomeric polymer" means and includes a polymer capable of recovering its original size and shape after deformation. In other words, an elastomeric polymer is a polymer having elastic or viscoelastic properties. Elastomeric polymers may also be referred to as "elastomers" in the art. Elastomeric polymers include, without limitation, homopolymers (polymers having a single chemical unit repeated) and copolymers (polymers having two or more chemical units).

As used herein, the term "elastomeric block copolymer" means and includes an elastomeric polymer having groups or blocks of homopolymers linked together, such as A-B diblock copolymers and A-B-A triblock copolymers. A-B diblock copolymers have two distinct blocks of homopolymers. A-B-A triblock copolymers have two blocks of a single homopolymer (A) each linked to a single block of a different homopolymer (B).

As used herein, the term "plasticizer" means and includes a substance added to another material (e.g., an elastomeric polymer) to increase a workability of the material. For example, a plasticizer may increase the flexibility, softness, or extensibility of the material. Plasticizers include, without limitation, hydrocarbon fluids, such as mineral oils. Hydrocarbon plasticizers may be aromatic or aliphatic.

As used herein, the term "elastomeric material" means and includes elastomeric polymers and mixtures of elastomeric polymers with plasticizers and/or other materials. Elastomeric materials are elastic (*i.e.,* capable of recovering size and shape after deformation). Elastomeric materials include, without limitation, materials referred to in the art as "elastomer gels," "gelatinous elastomers," or simply "gels."

With continued reference to FIG. 8, the buckling walls 202 of cushion 200 are interconnected to one another and part of a single, integral volume of elastomeric material. As shown in FIG. 8, the buckling walls 202 may be oriented in two directions, intersecting at right angles, and defining square voids 204. However, the buckling walls 202 may intersect one another at any angle. For example, the buckling walls 202 may intersect at other angles and define voids 204 of other shapes, such as triangles, parallelograms, hexagons, *etc.*

The buckling walls 202 are formed of an elastomeric material. Elastomeric materials are described in, for example, U.S. Patent No. 5,994,450, issued November 30, 1999, and entitled "Gelatinous Elastomer and Methods of Making and Using the Same and Articles Made Therefrom"; U.S. Patent No. 7,964,664, issued June 21, 2011, and entitled "Gel with Wide Distribution of MW in Mid-Block"; and U.S. Patent No. 4,369,284, issued January 18, 1983, and entitled "Thermoplastic Elastomer Gelatinous Compositions"; the disclosures of each of which are incorporated herein in their entirety by this reference. The elastomeric material may include an elastomeric polymer and a plasticizer. The elastomeric material may be a gelatinous elastomer (also referred to in the art as gel, elastomer gel, or elastomeric gel), a thermoplastic elastomer, a natural rubber, a synthetic elastomer, a blend of natural and synthetic elastomers, *etc.*

The elastomeric polymer may be an A-B-A triblock copolymer such as styrene ethylene propylene styrene (SEPS), styrene ethylene butylene styrene (SEBS), and styrene ethylene ethylene propylene styrene (SEEPS). For example, A-B-A triblock copolymers are currently commercially available from Kuraray America, Inc., of Houston, TX, under the trade name SEPTON^{®} 4055, and from Kraton Polymers, LLC, of Houston, TX, under the trade names KRATON^{®} E1830, KRATON^{®} G1650, and KRATON^{®} G1651. In these examples, the "A" blocks are styrene. The "B" block may be rubber (e.g., butadiene, isoprene, *etc.*) or hydrogenated rubber (*e.g.,* ethylene/propylene or ethylene/butylene or ethylene/ethylene/propylene) capable of being plasticized with mineral oil or other hydrocarbon fluids. The elastomeric material may include elastomeric polymers other than styrene-based copolymers, such as non-styrenic elastomeric polymers that are thermoplastic in nature or that can be solvated by plasticizers or that are multi-component thermoset elastomers.

The elastomeric material may include one or more plasticizers, such as hydrocarbon fluids. For example, elastomeric materials may include aromatic-free food-grade white paraffinic mineral oils, such as those sold by Sonnebom, Inc., of Mahwah, NJ, under the trade names BLANDOL^{®} and CARNATION^{®}.

In some embodiments, the elastomeric material may have a plasticizer-to-polymer ratio from about 0.1:1 to about 50:1 by weight. For example, elastomeric materials may have plasticizer-to-polymer ratios from about 1:1 to about 30:1 by weight, or even from about 1.5:1 to about 10:1 by weight. In further embodiments, elastomeric materials may have plasticizer-to-polymer ratios of about 2:1 by weight.

The elastomeric material may include any type of gelatinous elastomer. For example, the elastomeric material may include a melt-blend of one part by weight of a styrene-ethylene-ethylene-propylene-styrene (SEEPS) elastomeric triblock copolymer (e.g., SEPTON^{®} 4055) with two parts by weight of a 70-weight straight-cut white paraffinic mineral oil (e.g., CARNATION^{®} white mineral oil) and, optionally, pigments, antioxidants, and/or other additives.

The elastomeric material may comprise a material that returns to its original shape after deformation, and that may be elastically stretched. The elastomeric material may be rubbery in feel, but may deform to the shape of an object applying a deforming pressure better than conventional rubber materials, and may have a durometer hardness lower than conventional rubber materials. For example, the elastomeric material may have a hardness on the Shore A scale of less than about 50, from about 0.1 to about 50, or less than about 5.

The elastomeric material may be generally nonsticky, such that the cushion 200 may return to its original shape after a load is removed. That is, the elastomeric material may be sufficiently nonsticky so that buckling walls 202 do not stick to one another or do not remain stuck to one another after a deforming force is removed. Thus, any contact between adjacent buckling walls 202 may cease immediately or soon after the force is removed. The elastomeric material may be formulated to have any selected stickiness or tackiness, such as to control the rate of response to removal of a load.

The cushion 200 may be combined with other layers of material, such as foam, and encased in fabric so as to form a mattress 102.

While the present disclosure has been described herein with respect to certain illustrated embodiments, those of ordinary skill in the art will recognize and appreciate that it is not so limited. Rather, many additions, deletions, and modifications to the illustrated embodiments may be made without departing from the scope of the disclosure as hereinafter claimed.

## Claims

1. A mattress protector (100), comprising:
a composite sheet (104) having a non-deformed length (L) and a non-deformed width (W), the composite sheet including:
a circular-knit fabric (106) comprising elastomeric fibers; and
a water impermeable polymer (108) substantially embedding the circular-knit fabric (106), wherein the water impermeable polymer (108) exhibits an average fabric stretch percent of at least 50% along a length (L) of the composite sheet (104) and of at least 25% along a width (W) of the composite sheet (104);
wherein the composite sheet (104) is capable of repeatedly stretching to a deformed length (L) of at least 115% of the non-deformed length (L) responsive to a tensile force less than six pounds (2.72 kg) per linear inch (2.54 cm) and to repeatedly return to within 8% of the non-deformed length (L) without rupture or permanent wrinkling of the composite sheet (104).

2. The mattress protector (100) of claim 1, wherein the circular-knit fabric (106) and the water impermeable polymer (108) enable the composite sheet (104) to repeatedly stretch to a deformed length (L) of at least 125% of the non-deformed length (L) and to repeatedly return to within 8% of the non-deformed length (L) without rupture or permanent wrinkling of the composite sheet responsive to a tensile force less than five pounds (2.26 kg) per linear inch (2.54 cm).

3. The mattress protector (100) of claim 1 or claim 2, wherein the elastomeric fibers of the circular-knit fabric (106) comprise spandex.

4. The mattress protector (100) of claim 3, wherein the circular-knit fabric (106) comprises about 10% to about 20% by weight spandex.

5. The mattress protector (100) of claim 4, wherein the circular-knit fabric (106) comprises about 80% to about 90% by weight polyester.

6. The mattress protector (100) of claim 5, wherein the circular-knit fabric (106) comprises knitted yarn.

7. The mattress protector (100) of claim 1 or claim 2, wherein the mattress protector (100) includes a rectangular top portion (112) and four rectangular side portions (114A-D), opposing side ends of each rectangular side portion (114A-D) adjoined to side ends of two adjacent rectangular side portions (114A-D), at least the top portion (112) comprising the composite sheet (104).

8. The mattress protector (100) of claim 7, further comprising an elastic member extending along a lower end of each of the four rectangular side portions (114A-D).

9. The mattress protector (100) of claim 1 or claim 2, wherein the mattress protector (100) has the shape of a rectangular prism when disposed on a mattress (102) and includes a rectangular top portion (112), a rectangular bottom portion (116), and four rectangular side portions (114A-D), at least the rectangular top portion (112) comprising the composite sheet (104).

10. The mattress protector (100) of claim 9, further comprising an openable and closable aperture through which a mattress (102) may be inserted into the mattress protector (100).

11. The mattress protector (100) of claim 10, further comprising a fastening member (118) for fastening the aperture closed.

12. The mattress protector (100) of claim 11, wherein the fastening member (118) comprises a zipper.

13. An assembly, comprising:
a mattress (102); and
a mattress protector (100) as recited in claim 1 or claim 2 covering the mattress (102).

14. The assembly of claim 13, wherein the circular-knit fabric (106) comprises yarn including about 10% to about 20% by weight spandex.

15. The assembly of claim 14, wherein the mattress (102) comprises an elastomeric polymer cushion (200), the elastomeric polymer cushion (200) including buckling walls (202) defining columnar voids (204) extending within the mattress (102) generally along a direction perpendicular to a cushioning surface (206) of the elastomeric polymer cushion (200), the buckling walls (202) configured to buckle when a force applied to the cushioning surface (206) exceeds a threshold level.

16. A method of forming a mattress protector (100),
comprising:
providing a circular-knit fabric (106) comprising elastomeric fibers; and
embedding the circular-knit fabric (106) in a water impermeable polymer (108),
the circular-knit fabric (106) and the water impermeable polymer (108) forming a composite sheet (104) having a non-deformed length (L) and a non-deformed width (W), the water impermeable polymer (108) exhibiting an average fabric stretch percent of at least 50% along a length (L) of the composite sheet (104) and of at least 25% along a width (W) of the composite sheet (104), embedding of the circular-knit fabric (106) in the water impermeable polymer (108) of the composite sheet (104) enabling the composite sheet (104) to repeatedly stretch to a deformed length (L) of at least 115% of the non-deformed length (L) responsive to a tensile force less than six pounds (2.72kg) per linear inch (2.54cm) and to return to within 8% of the non-deformed length (L) without rupture or permanent wrinkling of the composite sheet.

17. The method of claim 16, wherein providing the circular-knit fabric (106) comprises providing a circular-knit fabric (106) with the elastomeric fibers comprising spandex.

18. The method of claim 17, wherein providing the circular-knit fabric (106) comprises providing a circular-knit fabric (106) including about 10% to about 20% by weight spandex.

19. The method of claim 18, wherein providing the circular-knit fabric (106) further comprises providing a circular-knit fabric (106) comprising about 80% to about 90% by weight polyester.

## Patentansprüche

1. Matratzenschutz (100), umfassend:
ein Verbundlaken (104) mit einer nicht verformten Länge (L) und einer nicht verformten Breite (W), wobei das Verbundlaken einschließt:
einen rundgestrickten Stoff (106), dar elastomere Fasern umfasst; und
ein wasserundurchlässiges Polymer (108), das den rundgestrickten Stoff (106) im Wesentlichen einbettet, wobei das wasserundurchlässige Polymer (108) eine durchschnittliche prozentuale Stoffdehnung von mindestens 50% entlang einer Länge (L) des Verbundlakens (104) und von mindestens 25% entlang einer Breite (W) des Verbundlakens (104) aufweist;
wobei das Verbundlaken (104) in der Lage ist, sich in Reaktion auf eine Zugkraft von weniger als 6 Pfund (2,72 kg) pro linearem Zoll (2,54 cm) wiederholt auf eine verformte Länge (L) von mindestens 115% der nicht verformten Länge (L) zu dehnen, und wiederholt zu innerhalb von 8% der nicht verformten Länge (L) zurückzukehren, ohne dass das Verbundlaken (104) reißt oder dauerhaft faltig wird.

2. Matratzenschutz (100) nach Anspruch 1, wobei der rundgestrickte Stoff (106) und das wasserundurchlässige Polymer (108) es dem Verbundlaken (104) ermöglichen, sich wiederholt auf eine verformte Länge (L) von mindestens 125% der nicht verformten Länge (L) zu dehnen und wiederholt zu innerhalb von 8% der nicht verformten Länge (L) zurückzukehren, ohne dass das Verbundlaken reißt oder dauerhaft faltig wird, in Reaktion auf eine Zugkraft von weniger als 5 Pfund (2,26 kg) pro linearem Zoll (2,54 cm).

3. Matratzenschutz (100) nach Anspruch 1 oder Anspruch 2, wobei die elastomeren Fasern des rundgestrickten Stoffs (106) Elasthan umfassen.

4. Matratzenschutz (100) nach Anspruch 3, wobei der rundgestrickte Stoff (106) etwa 10 Gew.-% bis etwa 20 Gew.-% Elasthan umfasst.

5. Matratzenschutz (100) nach Anspruch 4, wobei der rundgestrickte Stoff (106) etwa 80 Gew.-% bis etwa 90 Gew.-% Polyester umfasst.

6. Matratzenschutz (100) nach Anspruch 5, wobei der rundgestrickte Stoff (106) ein gestricktes Garn umfasst.

7. Matratzenschutz (100) nach Anspruch 1 oder Anspruch 2, wobei der Matratzenschutz (100) einen rechteckigen oberen Abschnitt (112) und vier rechteckige Seitenabschnitte (114A-D) einschließt, wobei gegenüberliegende Seitenenden jedes rechteckigen Seitenabschnitts (114A-D) an Seitenenden von zwei benachbarten rechteckigen Seitenabschnitten (114A-D) angrenzen, wobei zumindest der obere Abschnitt (112) das Verbundlaken (104) umfasst.

8. Matratzenschutz (100) nach Anspruch 7, ferner umfassend ein elastisches Element, das sich entlang eines unteren Endes jedes der vier rechteckigen Seitenabschnitte (114A D) erstreckt.

9. Matratzenschutz (100) nach Anspruch 1 oder Anspruch 2, wobei der Matratzenschutz (100) die Form eines rechteckigen Prismas hat, wenn er auf einer Matratze (102) angeordnet ist, und einen rechteckigen oberen Abschnitt (112), einen rechteckigen unteren Abschnitt (116) und vier rechteckige Seitenabschnitte (114A-D) einschließt, wobei zumindest der rechteckige obere Abschnitt (112) das Verbundlaken (104) umfasst.

10. Matratzenschutz (100) nach Anspruch 9, ferner umfassend eine zu öffnende und zu schließende Öffnung, durch die eine Matratze (102) in den Matratzenschutz (100) eingeführt werden kann.

11. Matratzenschutz (100) nach Anspruch 10, ferner umfassend ein Befestigungselement (118) zum Verschließen der Öffnung.

12. Matratzenschutz (100) nach Anspruch 11, wobei das Befestigungselement (118) einen Reißverschluss umfasst.

13. Anordnung, umfassend:
eine Matratze (102); und
einen Matratzenschutz (100) nach Anspruch 1 oder Anspruch 2, der die Matratze (102) bedeckt.

14. Anordnung nach Anspruch 13, wobei der rundgestrickte Stoff (106) Garn umfasst, das etwa 10 Gew.-% bis etwa 20 Gew.-% Elasthan einschließt.

15. Anordnung nach Anspruch 14, wobei die Matratze (102) ein elastomeres Polymerpolster (200) umfasst, wobei das elastomere Polymerpolster (200) Knickwände (202) einschließt, die säulenförmige Hohlräume (204) definieren, die sich innerhalb der Matratze (102) im Allgemeinen entlang einer Richtung senkrecht zu einer Polsteroberfläche (206) des elastomeren Polymerpolsters (200) erstrecken, wobei die Knickwände (202) so konfiguriert sind, dass sie sich knicken, wenn eine auf die Polsteroberfläche (206) ausgeübte Kraft einen Schwellenwert überschreitet.

16. Verfahren zum Herstellen eines Matratzenschutzes (100), umfassend:
Bereitstellen eines rundgestrickten Stoffs (106), der elastomere Fasern umfasst; und
Einbetten des rundgestrickten Stoffs (106) in ein wasserundurchlässiges Polymer (108),
wobei der rundgestrickte Stoff (106) und das wasserundurchlässige Polymer (108) ein Verbundlaken (104) mit einer nicht verformten Länge (L) und einer nicht verformten Breite (W) bilden, wobei das wasserundurchlässige Polymer (108) eine durchschnittliche prozentuale Stoffdehnung von mindestens 50% entlang einer Länge (L) des Verbundlakens (104) und von mindestens 25% entlang einer Breite (W) des Verbundlakens (104) aufweist, Einbetten des rundgestrickten Stoffs (106) in das wasserundurchlässige Polymer (108) des Verbundlakens (104), wodurch das Verbundlaken (104) in die Lage versetzt wird, sich in Reaktion auf eine Zugkraft von weniger als 6 Pfund (2,72 kg) pro linearem Zoll (2,54 cm) wiederholt auf eine verformte Länge (L) von mindestens 115% der nicht verformten Länge (L) zu dehnen und zu innerhalb von 8 % der nicht verformten Länge (L) zurückzukehren, ohne dass das Verbundlaken reißt oder dauerhaft faltig wird.

17. Verfahren nach Anspruch 16, wobei das Bereitstellen des rundgestrickten Stoffs (106) ein Bereitstellen eines rundgestrickten Stoffs (106) mit den Elasthan umfassenden Elastomerfasern umfasst.

18. Verfahren nach Anspruch 17, wobei das Bereitstellen des rundgestrickten Stoffs (106) ein Bereitstellen eines rundgestrickten Stoffs (106) umfasst, der etwa 10 Gew.-% bis etwa 20 Gew.-% Elasthan einschließt.

19. Verfahren nach Anspruch 18, wobei das Bereitstellen des rundgestrickten Stoffs (106) ferner ein Bereitstellen eines rundgestrickten Stoffs (106) umfasst, der etwa 80 Gew.-% bis etwa 90 Gew.-% Polyester umfasst.

## Revendications

1. Dispositif de protection de matelas (100), comprenant :
une feuille composite (104) ayant une longueur non déformée (L) et une largeur non déformée (W), la feuille composite comportant :
un tricot circulaire (106) comprenant des fibres élastomères ; et
un polymère imperméable à l'eau (108) intégrant en grande partie le tricot circulaire (106), le polymère imperméable à l'eau (108) présentant un pourcentage d'étirement de tissu moyen d'au moins 50 % le long d'une longueur (L) de la feuille composite (104) et d'au moins 25 % le long d'une largeur (W) de la feuille composite (104) ;
dans lequel la feuille composite (104) peut s'étirer de façon répétée jusqu'à une longueur déformée (L) représentant au moins 115 % de la longueur non déformée (L) en réponse à une force de traction inférieure à six livres (2,72 kg) par pouce linéaire (2,54 cm) et retourner de façon répétée dans les 8 % de la longueur non déformée (L) sans rupture ni froissement permanent de la feuille composite (104).

2. Dispositif de protection de matelas (100) selon la revendication 1, dans lequel le tricot circulaire (106) et le polymère imperméable à l'eau (108) permettent à la feuille composite (104) de s'étirer de façon répétée jusqu'à une longueur déformée (L) représentant au moins 125 % de la longueur non déformée (L) et de retourner de façon répétée dans les 8 % de la longueur non déformée (L) sans rupture ni froissement permanent de la feuille composite en réponse à une force de traction inférieure à cinq livres (2,26 kg) par pouce linéaire (2,54 cm).

3. Dispositif de protection de matelas (100) selon la revendication 1 ou la revendication 2, dans lequel les fibres élastomères du tricot circulaire (106) comprennent de l'élasthanne.

4. Dispositif de protection de matelas (100) selon la revendication 3, dans lequel le tricot circulaire (106) comprend environ 10 % à environ 20 % en poids d'élasthanne.

5. Dispositif de protection de matelas (100) selon la revendication 4, dans lequel le tricot circulaire (106) comprend environ 80 % à environ 90 % en poids de polyester.

6. Dispositif de protection de matelas (100) selon la revendication 5, dans lequel le tricot circulaire (106) comprend du fil tricoté.

7. Dispositif de protection de matelas (100) selon la revendication 1 ou la revendication 2, le dispositif de protection de matelas (100) comportant une partie supérieure rectangulaire (112) et quatre parties latérales rectangulaires (114A-D), les extrémités latérales opposées de chaque partie latérale rectangulaire (114A-D) étant assemblées à des extrémités latérales de deux parties latérales rectangulaires (114AD) adjacentes, au moins la partie supérieure (112) comprenant la feuille composite (104).

8. Dispositif de protection de matelas (100) selon la revendication 7, comprenant en outre un élément élastique s'étendant le long d'une extrémité inférieure de chacune des quatre parties latérales rectangulaires (114A-D).

9. Dispositif de protection de matelas (100) selon la revendication 1 ou la revendication 2, le dispositif de protection de matelas (100) ayant la forme d'un prisme rectangulaire lorsqu'il est disposé sur un matelas (102) et comportant une partie supérieure rectangulaire (112), une partie inférieure rectangulaire (116) et quatre parties latérales rectangulaires (114A-D), au moins la partie supérieure rectangulaire (112) comprenant la feuille composite (104).

10. Dispositif de protection de matelas (100) selon la revendication 9, comprenant en outre un orifice pouvant être ouvert et fermé par lequel un matelas (102) peut être inséré dans le dispositif de protection de matelas (100) .

11. Dispositif de protection de matelas (100) selon la revendication 10, comprenant en outre un élément de fermeture (108) destiné à maintenir l'orifice fermé.

12. Dispositif de protection de matelas (100) selon la revendication 11, dans lequel l'élément de fermeture (108) comprend une fermeture éclair.

13. Ensemble, comprenant :
un matelas (102) ; et
un dispositif de protection de matelas (100) selon la revendication 1 ou la revendication 2 recouvrant le matelas (102) .

14. Ensemble selon la revendication 13, dans lequel le tricot circulaire (106) comprend du fil comportant environ 10 % à environ 20 % en poids d'élasthanne.

15. Ensemble selon la revendication 14, dans lequel le matelas (102) comprend un coussin en polymère élastomère (200), le coussin en polymère élastomère (200) comportant des cloisons déformables (202) définissant des vides colonnaires (204) s'étendant à l'intérieur du matelas (102) généralement le long d'une direction perpendiculaire à une surface d'amortissement (206) du coussin en polymère élastomère (200), les cloisons déformables (202) étant configurées pour se déformer quand une force appliquée à la surface d'amortissement (206) dépasse un niveau seuil.

16. Procédé de formation d'un dispositif de protection de matelas (100), comprenant :
l'obtention d'un tricot circulaire (106) comprenant des fibres élastomères ; et
l'intégration du tricot circulaire (106) dans un polymère imperméable à l'eau (108),
le tricot circulaire (106) et le polymère imperméable à l'eau (108) formant une feuille composite (104) ayant une longueur non déformée (L) et une largeur non déformée (W), le polymère imperméable à l'eau (108) présentant un pourcentage d'étirement de tissu moyen d'au moins 50 % le long d'une longueur (L) de la feuille composite (104) et d'au moins 25 % le long d'une largeur (W) de la feuille composite (104), l'intégration du tricot circulaire (106) dans le polymère imperméable à l'eau (108) de la feuille composite (104) permettant à la feuille composite (104) de s'étirer de façon répétée jusqu'à une longueur déformée (L) représentant au moins 115 % de la longueur non déformée (L) en réponse à une force de traction inférieure à six livres (2,72 kg) par pouce linéaire (2,54 cm) et de retourner dans les 8 % de la longueur non déformée (L) sans rupture ni froissement permanent de la feuille composite.

17. Procédé selon la revendication 16, dans lequel l'obtention du tricot circulaire (106) comprend l'obtention d'un tricot circulaire (106) avec les fibres élastomères comprenant de l'élasthanne.

18. Procédé selon la revendication 17, dans lequel l'obtention du tricot circulaire (106) comprend l'obtention d'un tricot circulaire (106) comportant environ 10 % à environ 20 % en poids d'élasthanne.

19. Procédé selon la revendication 18, dans lequel l'obtention du tricot circulaire (106) comprend en outre l'obtention d'un tricot circulaire (106) comprenant environ 80 % à environ 90 % en poids de polyester.
